# EUROPEAN PATENT APPLICATION

(11) **EP 3 905 779 A1**
(43) Date of publication of application: **03.11.2021**
(21) Application number: 20749512.8
(22) Date of filing: 22.01.2020
(51) Int. Cl.: H04W 36/00

(54) **CELL HANDOVER METHOD AND APPARATUS, AND USER PROCESSING METHOD AND APPARATUS**

(30) Priority: 03.02.2019 CN 201910108617
(71) Applicant: ZTE Corporation, shenzhen Guangdong 518057 (CN)
(72) Inventor: HAN, Jiren, Shenzhen, Guangdong 518057 (CN); LIU, Zhuang, Shenzhen, Guangdong 518057 (CN); GAO, Yin, Shenzhen, Guangdong 518057 (CN)
(74) Representative: Canzler & Bergmeier Patentanwälte Partnerschaft mbB
(86) International application number: PCT/CN2020/073820
(87) International publication number: WO 2020/156447

(57) **Abstract**

Disclosed are a cell handover method and apparatus, and a user processing method and apparatus. Specifically, the cell handover method comprises: receiving a measurement report uploaded by a user equipment (UE), and sending, in response to the measurement report, a request message to a target network element, wherein the request message is used for instructing the target network element to establish a UE text; and handing over, according to the UE text, the UE to a target cell corresponding to the target network element. By means of the present application, the problem of the CAG connection management in the mobility in the dual connectivity of a UE and a base station is solved, and the beneficial effect of improving the CAG connection management in the mobility of the dual connectivity of the UE and the base station is achieved.

## Description

The present disclosure claims the priority of the Chinese Patent Application No. 201910108617.8 filed with the CNIPA on February 3, 2019, the entire contents of which are incorporated herein by reference.

### TECHNICAL FIELD

The present disclosure relates to the field of communications, and in particular, to a cell handover method, a cell handover device, a user processing method and a user processing device.

### BACKGROUND

A non-public network (NPN) allows restricted and conditional access by users to one or more cells in a mobile communication network, while a common cell can allow access by all subscribers (and roaming users) to an operator. The NPN can use the concept of Closed Access Group (CAG) for access control, and the CAG refers to a group of subscribers which are allowed to access one or more specific cells. One user can belong to a plurality of CAGs each having a CAG ID, and a User Equipment (UE) maintains a list of CAG IDs (allowed CAG ID list) of the CAGs to which the UE belongs, and the CAG cells included in the CAGs whose CAG IDs are not included in the list are not accessible to the UE. Each CAG cell broadcasts a CAG ID, and members in the CAG identified by the CAG ID are allowed to access the cell.

A UE can establish a dual connection with two base stations, one is a master base station (i.e., a master node (MN)) and the other is a secondary base station (i.e., a secondary node (SN)). With the architecture that a base station is divided into a centralized network element and a distributed network element, no process and method has been proposed to support CAG connection management in mobility when the dual connection is established between the UE and the base stations. In addition, no process and method has been proposed to support a core network to verify CAG membership of the UE on an Xn interface when the dual connection is established between the UE and the base stations. Therefore, the problem of CAG connection management in mobility when the dual connection is established between the UE and the base stations in 5G systems needs to be solved.

### SUMMARY

Embodiments of the present disclosure provide a cell handover method, a cell handover device, a user processing method and a user processing device, so as to at least solve the problem of CAG connection management in mobility when the dual connection is established between the UE and the base stations in the related art.

According to an embodiment of the present disclosure, there is provided a cell handover method applied to a master base station, and the method includes:
receiving a measurement report uploaded by a UE, and sending a request message, which is configured to instruct a target network element to establish a UE text, to the target network element in response to the measurement report; and
handing the UE over to a target cell corresponding to the target network element according to the UE text.

According to another embodiment of the present disclosure, there is provided a cell handover method applied to a user side, and the method includes:
sending a measurement report, which is configured to instruct a master base station to send a request message to a target network element in response to the measurement report, to the master base station, with the request message configured to instruct the target network element to establish a UE text; and
handing a UE over to a target cell corresponding to the target network element according to the UE text.

According to another embodiment of the present disclosure, there is provided a user processing method applied to a base station side, and the method includes:
receiving a UE text modification request message of next generation (NG) interface signaling sent by a core network, with the UE text modification request message of NG interface signaling carrying at least one of a CAG membership status of a UE, a cause value and an expiration indication; and
the expiration indication is configured to indicate expiration of CAG membership in a cell corresponding to a master base station and/or a secondary base station.

According to another embodiment of the present disclosure, there is provided a user processing method applied to a core network side, and the method includes:
sending a UE text modification request message of NG interface signaling to a base station side, with the UE text modification request message of NG interface signaling carrying at least one of a CAG membership status of a UE, a cause value and an expiration indication; and
the expiration indication is configured to indicate expiration of CAG membership in a cell corresponding to a master base station and/or a secondary base station.

According to another embodiment of the present disclosure, there is provided a cell handover device applied to a master base station, and the device includes:
a first receiving module configured to receive a measurement report uploaded by a UE, and send a request message, which is configured to instruct a target network element to establish a UE text, to the target network element in response to the measurement report; and
a first handover module configured to hand the UE over to a target cell corresponding to the target network element according to the UE text.

According to another embodiment of the present disclosure, there is provided a cell handover device applied to a user side, and the device includes:
a first sending module configured to send a measurement report, which is configured to instruct a master base station to send a request message to a target network element in response to the measurement report, to the master base station, with the request message configured to instruct the target network element to establish a UE text; and
a second handover module configured to hand a UE over to a target cell corresponding to the target network element according to the UE text.

According to another embodiment of the present disclosure, there is provided a user processing device applied to a base station side, and the device includes:
a second receiving module configured to receive a UE text modification request message of NG interface signaling sent by a core network, with the UE text modification request message of NG interface signaling carrying at least one of a CAG membership status of a UE, a cause value and an expiration indication; and
the expiration indication is configured to indicate expiration of CAG membership in a cell corresponding to a master base station and/or a secondary base station.

According to another embodiment of the present disclosure, there is provided a user processing device applied to a core network side, and the device includes:
a second sending module configured to send a UE text modification request message of NG interface signaling to a base station side, with the UE text modification request message of NG interface signaling carrying at least one of a CAG membership status of a UE, a cause value and an expiration indication; and
the expiration indication is configured to indicate expiration of CAG membership in a cell corresponding to a master base station and/or a secondary base station.

According to still another embodiment of the present disclosure, there is provided a storage medium having a computer program stored therein, and the computer program is configured to perform steps in any one of the above methods when being executed.

According to yet another embodiment of the present disclosure, there is provided an electronic device, which includes a memory having a computer program stored therein, and a processor configured to run the computer program to perform steps in any one of the above methods.

The present disclosure can solve the problem of CAG connection management in mobility when the dual connection is established between the UE and the base stations, and produce a beneficial effect of improving the CAG connection management in mobility when the dual connection is established between the UE and the base stations.

### BRIEF DESCRIPTION OF THE DRAWINGS

The drawings described here are intended to provide a further understanding of the present disclosure and constitutes a part of the present disclosure. The exemplary embodiments of the present disclosure and the description thereof are intended to explain the present disclosure, but do not constitute improper limitation to the present disclosure. In the drawings:
Fig. 1 is a flowchart illustrating a cell handover method according to an embodiment of the present disclosure;
Fig. 2 is a flowchart illustrating cell handover based on Scenario 1 according to an embodiment of the present disclosure;
Fig. 3 is a flowchart illustrating cell handover based on Scenario 2 according to an embodiment of the present disclosure;
Fig. 4 is a flowchart illustrating cell handover based on Scenario 3 according to an embodiment of the present disclosure;
Fig. 5 is a flowchart illustrating cell handover based on Scenario 4 according to an embodiment of the present disclosure;
Fig. 6 is a flowchart illustrating cell handover based on Scenario 5 according to an embodiment of the present disclosure;
Fig. 7 is a flowchart illustrating a cell handover method according to an embodiment of the present disclosure;
Fig. 8 is a flowchart illustrating a user processing method according to an embodiment of the present disclosure;
Fig. 9 is a flowchart illustrating user processing based on Scenario 6 according to an embodiment of the present disclosure;
Fig. 10 is a flowchart illustrating a user processing method according to an embodiment of the present disclosure;
Fig. 11 is a block diagram of a cell handover device according to an embodiment of the present disclosure;
Fig. 12 is a block diagram of a cell handover device according to an embodiment of the present disclosure;
Fig. 13 is a block diagram of a user processing device according to an embodiment of the present disclosure; and
Fig. 14 is a block diagram of a user processing device according to an embodiment of the present disclosure.

### DETAILED DESCRIPTION

The present disclosure will be described in detail below with reference to the drawings and the embodiments. It should be noted that the embodiments of the present disclosure and the features therein may be combined with each other if no conflict is incurred.

It should be noted that the terms "first", "second" and the like in description, claims, and drawings of the present disclosure are used for distinguishing between similar objects, but not necessarily for describing a particular order or chronological order.

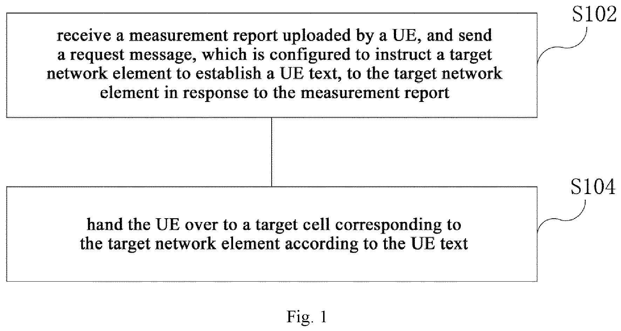

An embodiment of the present disclosure provides a cell handover method applied to a master base station, and Fig. 1 is a flowchart illustrating a cell handover method according to an embodiment of the present disclosure. As shown in Fig. 1, the method includes the following steps:
S102, receiving a measurement report uploaded by a UE, and sending a request message, which is configured to instruct a target network element to establish a UE text, to the target network element in response to the measurement report; and
S104, handing the UE over to a target cell corresponding to the target network element according to the UE text.

It should be noted that executing entities of S102 and S104 each are the master base station, but the present disclosure is not limited thereto.

It should be further noted that a specific type of the request message may be an Xn interface message or an X2 interface message.

In some implementations, the request message includes at least one of:
a secondary base station addition request message and a handover request message.

In some implementations, the target network element includes at least one of:
a master base station and a secondary base station.

In some implementations, the request message carries CAG membership information of the target cell, which includes at least one of:
an identifier of Public Land Mobile Network (PLMN) to which the target cell belongs, a CAG ID of the target cell, a membership status of the UE in the CAG to which the target cell belongs, and a cell access mode of the target cell.

In some implementations, the cell handover method further includes:
sending first NG interface information, which carries the CAG membership information of the target cell, to a core network.

In some implementations, the first NG interface information includes at least one of:
a Protocol Data Unit (PDU) session modification instruction message, a UE text modification instruction message and a path switch request message.

In some implementations, after sending the first NG interface information to the core network, the method further includes:
receiving second NG interface information, which is configured to instruct the core network to verify the CAG membership information of the target cell so as to obtain the membership status of the UE in the CAG to which the target cell belongs, sent by the core network.

In some implementations, in response to that the membership status of the UE in the CAG to which the target cell belongs is configured to indicate that the UE does not belong to a CAG membership corresponding to the target cell, the method includes:
sending a secondary base station modification request message to a secondary base station, with the secondary base station modification request message carrying at least one of:
a CAG ID of the UE, the membership status of the UE in the CAG to which the target cell belongs, and a cause for an inconsistency between a CAG membership status of the UE stored in the master base station and the membership status of the UE in the CAG to which the target cell belongs.

In some implementations, the second NG interface information includes at least one of:
a PDU session modification acknowledgement message, a UE text modification acknowledgement message and a path switch request acknowledgement message.

In some implementations, the cell access mode of the target cell includes at least one of:
a hybrid CAG cell, a closed CAG cell and an open CAG cell.

Specifically, the following scenarios are provided in order to facilitate a better understanding of the technical solution described in the above embodiment; and it should be further noted that the master base station is denoted by MN and the secondary base station is denoted by SN in the following scenarios.

### Scenario 1: a multi-connection SN node addition procedure (membership verification is carried out using a PDU session modification procedure)

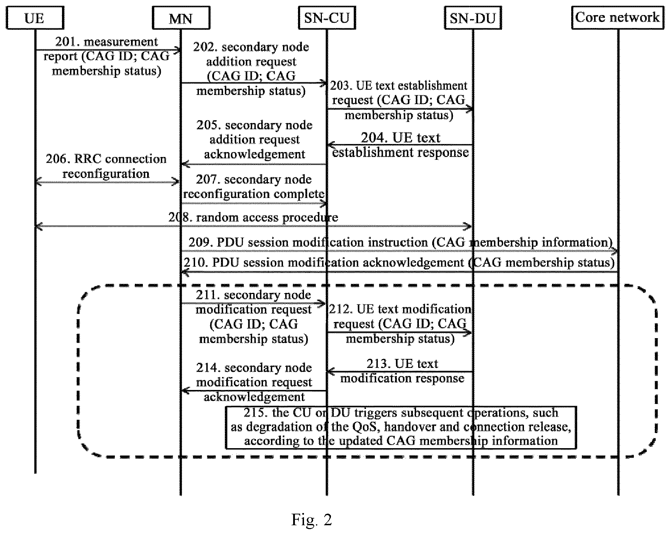

Fig. 2 is a flowchart illustrating cell handover based on Scenario 1 according to an embodiment of the present disclosure. As shown in Fig. 2, the cell handover including the following steps 201 to 210.

In step 201, the UE reports a CAG ID of a target cell and a CAG membership status in the target cell to the MN through a measurement report.

In step 202, the MN sends the CAG ID of the target cell and the CAG membership status in the target cell to an SN-CU (Centralized Unit) through a secondary node addition request message.

In step 203, the SN-CU sends the CAG ID of the target cell and the CAG membership status in the target cell to an SN-DU (Distributed Unit) through a UE text establishment request message.

In step 204, after a UE text is established, the SN-DU sends a UE text establishment response message to the SN-CU.

In step 205, the SN-CU sends a secondary node addition request acknowledgement message to the MN.

In step 206, the MN triggers a Radio Resource Control (RRC) connection reconfiguration procedure with the UE.

In step 207, the MN sends a secondary node reconfiguration complete message to the SN.

In step 208, a random access procedure is carried out between the SN-DU and the UE.

In step 209, the MN sends CAG membership information of the target cell to the core network through a PDU session modification instruction message; the CAG membership information of the target cell includes at least one of: the CAG ID of the target cell, the CAG membership status in the target cell, and a cell access mode of the target cell which is configured to identify whether the target cell is a hybrid CAG cell, a closed CAG cell or an open CAG cell.

In step 210, the core network verifies the received CAG membership information, and then sends a verified CAG membership status to the MN through a PDU session modification acknowledgement message.

If the CAG membership status returned in the step 210 is not consistent with the CAG membership status reported by the UE and stored at the MN side, the following steps 211 to 215 are performed.

In step 211, the SN-CU sends a secondary node modification request message, which carries the CAG ID of the target cell and the CAG membership status in the target cell, to the MN.

In step 212, the SN-CU sends a UE text modification request message, which carries the CAG ID of the target cell and the CAG membership status in the target cell, to the SN-DU.

In step 213, the SN-DU sends a UE text modification response message to the SN-CU.

In step 214, the SN-CU sends a secondary node modification request acknowledgement message to the MN

In step 215, the CU or DU triggers subsequent operations, such as degradation of the quality of service (QoS), handover and connection release, according to the updated CAG membership information.

### Scenario 2: a multi-connection secondary node addition procedure (membership verification is carried out using a UE text modification procedure)

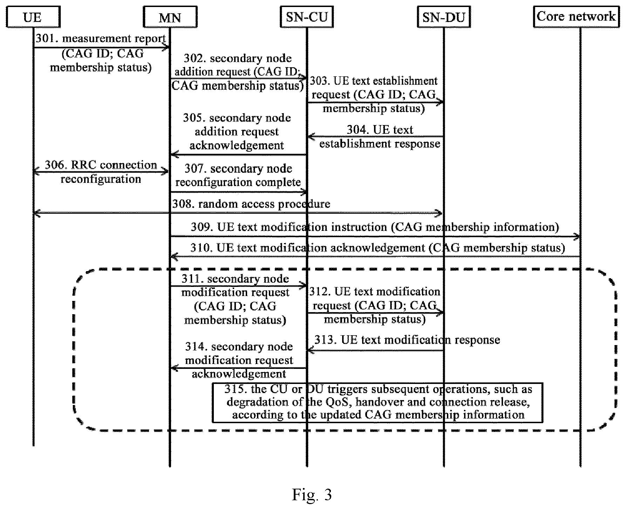

Fig. 3 is a flowchart illustrating cell handover based on Scenario 2 according to an embodiment of the present disclosure. As shown in Fig. 3, the cell handover including the following steps 301 to 310.

In step 301, the UE reports a CAG ID of a target cell and a CAG membership status in the target cell to the MN through a measurement report.

In step 303, the MN sends the CAG ID of the target cell and the CAG membership status in the target cell to an SN-CU through a secondary node addition request message.

In step 303, the SN-CU sends the CAG ID of the target cell and the CAG membership status in the target cell to an SN-DU through a UE text establishment request message.

In step 304, after a UE text is established, the SN-DU sends a UE text establishment response message to the SN-CU.

In step 305, the SN-CU sends a secondary node addition request acknowledgement message to the MN.

In step 306, the MN triggers an RRC connection reconfiguration procedure with the UE.

In step 307, the MN sends a secondary node reconfiguration complete message to the SN.

In step 308, a random access procedure is carried out between the SN-DU and the UE.

In step 309, the MN sends CAG membership information of the target cell to the core network through a UE text modification instruction message; and the CAG membership information of the target cell includes at least one of: the CAG ID of the target cell, the CAG membership status in the target cell, and a cell access mode of the target cell which is configured to identify whether the target cell is a hybrid CAG cell, a closed CAG cell or an open CAG cell.

In step 310, the core network verifies the received CAG membership information, and then sends a verified CAG membership status to the MN through a UE text modification acknowledgement message.

If the CAG membership status returned in the step 310 is not consistent with the CAG membership status reported by the UE and stored at the MN side, the following steps 311 to 315 are performed.

In step 311, the SN-CU sends a secondary node modification request message, which carries the CAG ID of the target cell and the CAG membership status in the target cell, to the MN.

In step 312, the SN-CU sends a UE text modification request message, which carries the CAG ID of the target cell and the CAG membership status in the target cell, to the SN-DU.

In step 313, the SN-DU sends a UE text modification response message to the SN-CU.

In step 314, the SN-CU sends a secondary node modification request acknowledgement message to the MN

In step 315, the CU or DU triggers subsequent operations, such as QoS degradation, handover and connection release, according to the updated CAG membership information.

### Scenario 3: a multi-connection SN node handover procedure (CAG membership verification is carried out using a UE text modification procedure)

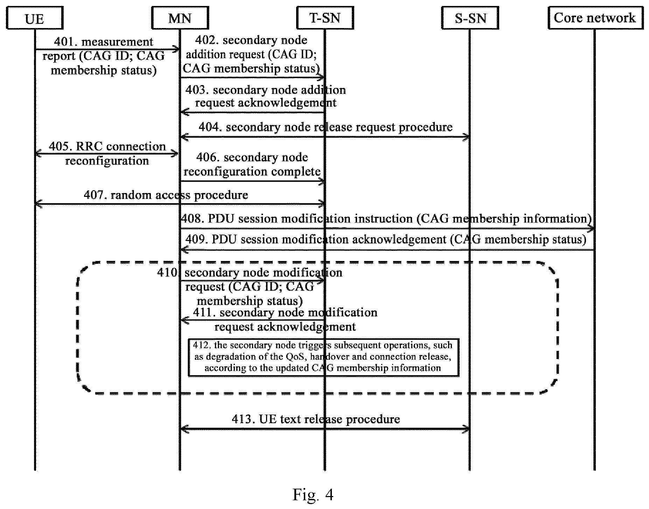

Fig. 4 is a flowchart illustrating cell handover based on Scenario 3 according to an embodiment of the present disclosure. As shown in Fig. 4, the cell handover including the following steps 401 to 409.

In step 401, the UE reports a CAG ID of a target cell and a CAG membership status in the target cell to the MN through a measurement report.

In step 402, the MN sends the CAG ID of the target cell and the CAG membership status in the target cell to a target SN through a secondary node addition request message.

In step 403, the target SN sends a secondary node addition request acknowledgement message to the MN

In step 404, the MN triggers a secondary node release request procedure to release a source SN.

In step 405, the MN initiates an RRC connection reconfiguration procedure with the UE.

In step 406, the MN sends a secondary node reconfiguration complete message to the target SN.

In step 407, a random access procedure is carried out between the target SN and the UE.

In step 408, the MN sends CAG membership information of the target cell to the core network through a PDU session modification instruction message; and the CAG membership information of the target cell includes at least one of: the CAG ID of the target cell, the CAG membership status in the target cell, and a cell access mode of the target cell which is configured to identify whether the target cell is a hybrid CAG cell, a closed CAG cell or an open CAG cell.

In step 409, the core network verifies the received CAG membership information, and then sends a verified CAG membership status to the MN through a PDU session modification acknowledgement message.

If the CAG membership status returned in the step 409 is not consistent with the CAG membership status reported by the UE and stored at the MN side, the following steps 410 to 413 are performed.

In step 410, the MN sends a secondary node modification request message, which carries the CAG ID of the target cell and a CAG secondary node modification request, to the target SN.

In step 411, the target SN sends a secondary node modification request acknowledgement message to the MN

In step 412, the SN triggers subsequent operations, such as QoS degradation, handover and connection release, according to the updated CAG membership information.

In step 413, the MN initiates a UE text release procedure with the source SN.

### Scenario 4: a multi-connection SN node handover procedure (CAG membership verification is carried out using a UE text modification procedure)

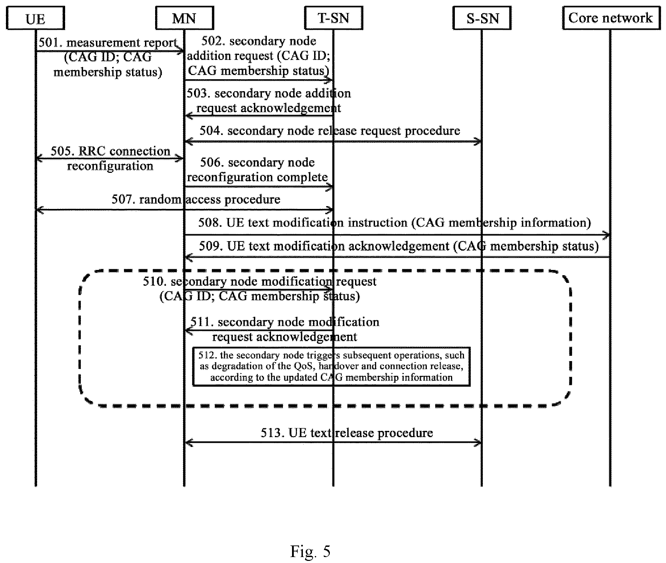

Fig. 5 is a flowchart illustrating cell handover based on Scenario 4 according to an embodiment of the present disclosure. As shown in Fig. 5, the cell handover including the following steps 501 to 509.

In step 501, the UE reports a CAG ID of a target cell and a CAG membership status in the target cell to the MN through a measurement report;

In step 502, the MN sends the CAG ID of the target cell and the CAG membership status in the target cell to a target SN through a secondary node addition request message;

In step 503, the target SN sends a secondary node addition request acknowledgement message to the MN;

In step 504, the MN triggers a secondary node release request procedure to release a source SN;

In step 505, the MN initiates an RRC connection reconfiguration procedure with the UE;

In step 506, the MN sends a secondary node reconfiguration complete message to the target SN;

In step 507, a random access procedure is carried out between the target SN and the UE;

In step 508, the MN sends CAG membership information of the target cell to the core network through a UE text modification instruction message; and the CAG membership information of the target cell includes at least one of: the CAG ID of the target cell, the CAG membership status in the target cell, and a cell access mode of the target cell which is configured to identify whether the target cell is a hybrid CAG cell, a closed CAG cell or an open CAG cell.

In step 509, the core network verifies the received CAG membership information, and then sends a verified CAG membership status to the MN through a UE text modification acknowledgement message.

If the CAG membership status returned in the step 509 is not consistent with the CAG membership status reported by the UE and stored at the MN side, the following steps 510 to 513 are performed.

In step 510, the MN sends a secondary node modification request message, which carries the CAG ID and the CAG membership status, to the target SN.

In step 511, the target SN sends a secondary node modification request acknowledgement message to the MN

In step 512, the SN triggers subsequent operations, such as QoS degradation, handover and connection release, according to the updated CAG membership information.

In step 513, the MN initiates a UE text release procedure with the source SN.

### Scenario 5: a multi-connection SN node handover procedure (CAG membership verification is carried out using a path switch request procedure)

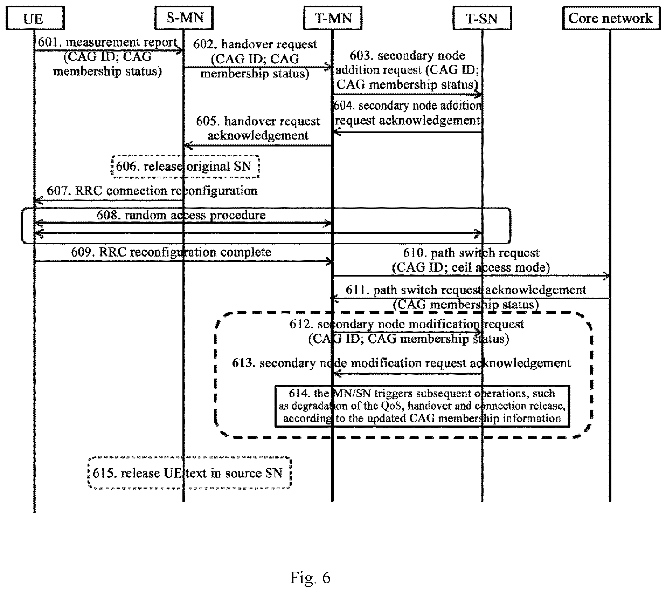

Fig. 6 is a flowchart illustrating cell handover based on Scenario 5 according to an embodiment of the present disclosure. As shown in Fig. 6, the cell handover including the following steps 601 to 611.

In step 601, the UE reports a CAG ID of a target cell and a CAG membership status in the target cell to a source MN through a measurement report.

In step 602, the source MN sends the CAG ID of the target cell and the CAG membership status in the target cell to a target SN through a handover request message.

In step 603, the target MN sends the CAG ID of the target cell and the CAG membership status in the target cell to a target SN through a secondary node addition request message.

In step 604, the target SN sends a secondary node addition request acknowledgement message to the target MN.

In step 605, the target MN sends a handover request acknowledgement message to the source MN.

In step 606, the source MN releases an original SN.

In step 607, the source MN initiates an RRC connection reconfiguration procedure with the UE.

In step 608, the UE performs a random access procedure with the target MN and the target SN separately.

In step 609, the UE sends an RRC connection reconfiguration complete message to the target MN

In step 610, the MN sends the CAG ID of the target cell and a cell access mode of the target cell to the core network through a path switch request message.

In step 611, the core network verifies received CAG membership information, and then sends a verified CAG membership status to the target MN through a path switch request acknowledgement message.

If the CAG membership status returned in the step 611 is not consistent with the CAG membership status reported by the UE and stored at the MN side, the following steps 612 to 615 are performed.

In step 612, the target MN sends a secondary node modification request message, which carries the CAG ID of the target cell and the CAG membership status in the target cell, to the target SN.

In step 613, the target SN sends a secondary node modification request acknowledgment message to the target MN

In step 614, the SN triggers subsequent operations, such as QoS degradation, handover and connection release, according to the updated CAG membership information.

In step 615, the source MN releases a UE text in a source SN.

Through the steps above, the problem of CAG connection management in mobility when the dual connection is established between the UE and the base stations is solved, and a beneficial effect of improving the CAG connection management in mobility when the dual connection is established between the UE and the base stations is produced.

Through the above description of the implementations, those of ordinary skill in the art can understand clearly that the method according to the above embodiment may be implemented by software together with a necessary general-purpose hardware platform, or by hardware, but the former is preferable in most cases. Based on such understanding, the essence of the technical solution of the present disclosure or the contribution made by the technical solution of the present disclosure to the related art may be implemented in the form of a software product, which is stored in a storage medium (such as a Read-Only Memory (ROM)/Random Access Memory (RAM), a magnetic disk and an optical disc) and includes several instructions to enable a UE (which may be a mobile phone, a computer, a server or a network device) to execute the method described in each embodiment of the present disclosure.

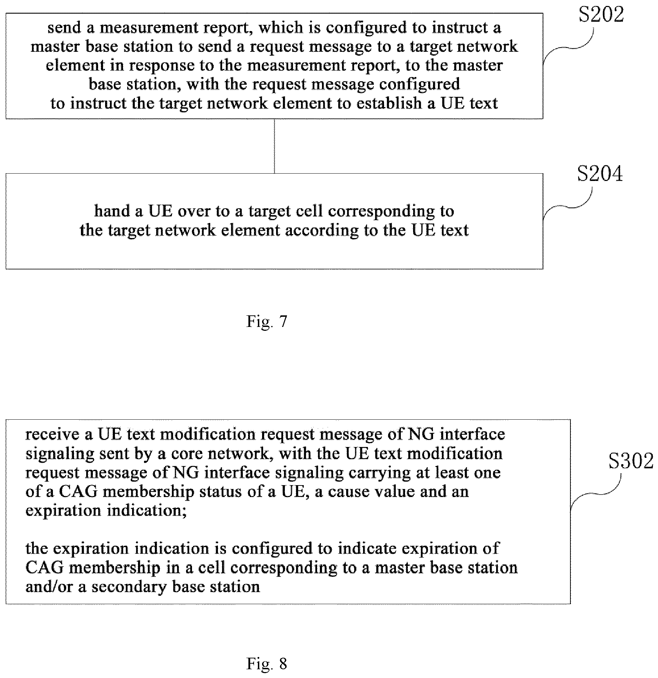

An embodiment of the present disclosure provides a cell handover method applied to a user side, and Fig. 7 is a flowchart illustrating a cell handover method according to an embodiment of the present disclosure. As shown in Fig. 7, the method includes the following steps:
S202, sending a measurement report, which is configured to instruct a master base station to send a request message to a target network element in response to the measurement report, to the master base station, with the request message configured to instruct the target network element to establish a UE text; and
S204, handing a UE over to a target cell corresponding to the target network element according to the UE text.

It should be noted that executing entities of S202 and S204 each are both a user, but the present disclosure is not limited thereto.

In some implementations, the request message includes at least one of:
a secondary base station addition request message and a handover request message.

In some implementations, the target network element includes at least one of:
a master base station and a secondary base station.

In some implementations, the request message carries CAG membership information of the target cell, which includes at least one of:
an identifier of the PLMN to which the target cell belongs, a CAG ID of the target cell, a membership status of a UE in the CAG to which the target cell belongs, and a cell access mode of the target cell.

In some implementations, the cell handover method further includes:
sending first NG interface information, which carries the CAG membership information of the target cell, to a core network.

In some implementations, the first NG interface information includes at least one of:
a PDU session modification instruction message, a UE text modification instruction message and a path switch request message.

In some implementations, after sending the first NG interface information to the core network, the method further includes:
receiving second NG interface information, which is configured to instruct the core network to verify the CAG membership information of the target cell so as to obtain the membership status of the UE in the CAG to which the target cell belongs, sent by the core network.

In some implementations, in response to that the membership status of the UE in the CAG to which the target cell belongs is configured to indicate that the UE does not belong to the CAG membership corresponding to the target cell, the method includes:
sending a secondary base station modification request message to a secondary base station, with the secondary base station modification request message carrying at least one of:
a CAG ID of the UE, the membership status of the UE in the CAG to which the target cell belongs, and a cause for an inconsistency between a CAG membership status of the UE stored in the master base station and the membership status of the UE in the CAG to which the target cell belongs.

In some implementations, the second NG interface information includes at least one of:
a PDU session modification acknowledgement message, a UE text modification acknowledgement message and a path switch request acknowledgement message.

In some implementations, the cell access mode of the target cell includes at least one of:
a hybrid CAG cell, a closed CAG cell and an open CAG cell.

Through the steps above, the problem of CAG connection management in mobility when the dual connection is established between the UE and the base stations is solved, and a beneficial effect of improving the CAG connection management in mobility when the dual connection is established between the UE and the base stations is produced.

Through the above description of the implementations, those of ordinary skill in the art can understand clearly that the method according to the above embodiment may be implemented by software together with a necessary general-purpose hardware platform, or by hardware, but the former is preferable in most cases. Based on such understanding, the essence of the technical solution of the present disclosure or the contribution made by the technical solution of the present disclosure to the related art may be implemented in the form of a software product, which is stored in a storage medium (such as an ROM)/RAM, a magnetic disk and an optical disc) and includes several instructions to enable a UE (which may be a mobile phone, a computer, a server or a network device) to execute the method described in each embodiment of the present disclosure.

An embodiment of the present disclosure provides a user processing method applied to a base station side, and Fig. 8 is a flowchart illustrating a user processing method according to an embodiment of the present disclosure. As shown in Fig. 8, the method includes the following step:
S302, receiving a UE text modification request message of NG interface signaling sent by a core network, with the UE text modification request message of NG interface signaling carrying at least one of a CAG membership status of a UE, a cause value and an expiration indication;
the expiration indication is configured to indicate expiration of CAG membership in a cell corresponding to a master base station and/or a secondary base station.

It should be noted that an executing entity of S302 is a base station, but the present disclosure is not limited thereto.

In some implementations, after receiving the UE text modification request message of NG interface signaling sent by the core network, the method further includes:
sending a secondary node modification request, which carries the cause value, to a secondary base station.

In some implementations, after receiving the UE text modification request message of NG interface signaling sent by the core network, the method further includes at least one of the following steps:
triggering a cell handover procedure by a target network element;
triggering a UE text release procedure by the target network element;
triggering the UE text release procedure by the core network; and degrading the QoS of the UE by the core network.

The target network element includes at least one of a master base station and a secondary base station.

In some implementations, the triggering the UE text release procedure by the target network element includes at least one of the following steps:
sending a UE text release request message, which carries the cause value, by a centralized network element at the base station side to the core network;
sending a UE text release command message, which carries the cause value, by the centralized network element at the base station side to a distributed network element at the base station side; and
sending a UE text release request message, which carries the cause value, by the distributed network element at the base station side to the centralized network element at the base station side.

In some implementations, the triggering the UE text release procedure by the core network includes:
sending a UE text release command message, which carries the cause value, by the core network to the centralized network element at the base station side.

In some implementations, after sending the UE text release command message by the core network to the centralized network element at the base station side, the method further includes:
sending a UE text release command message, which carries the cause value, by a CU at the base station side to the distributed network element at the base station side.

Specifically, the following scenario is provided in order to facilitate a better understanding of the technical solution described in the above embodiment.

Scenario 6: the expiration or update of membership of a UE triggers a UE text modification procedure between the UE and the base station.

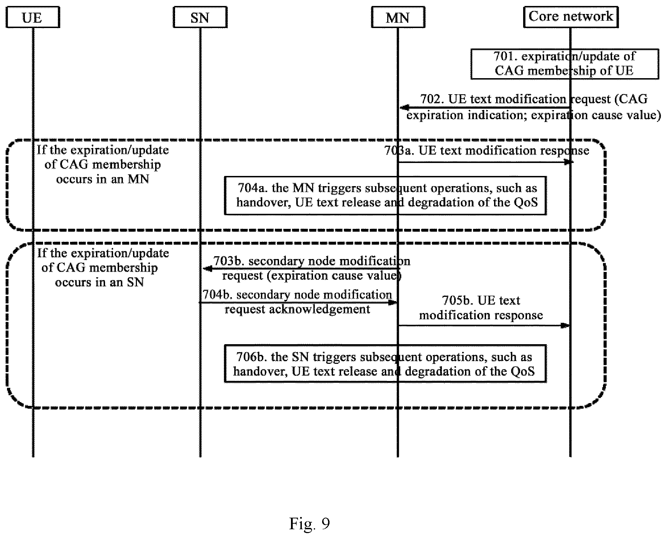

Fig. 9 is a flowchart illustrating user processing based on Scenario 6 according to an embodiment of the present disclosure. As shown in Fig. 9, the user processing includes the following steps 701 and 702.

In step 701, the core network detects the expiration or update of CAG membership of the UE.

In step 702, the core network triggers a UE text modification request message attached with a cause value (CAG Subscription Expiry) and a CAG Expiration indication which is configured to indicate whether the expiration or update of CAG membership occurs in the MN or the SN.

For the expiration or update of CAG membership under a multi-connection condition, the user processing is carried out in the following two ways.

If the expiration or update of CAG membership occurs at an MN side, the following steps 703a and 704a are performed.

In step 703a, a UE text modification response message is sent from the MN side to the core network.

In step 704a, a cell handover operation is performed at the MN side, or a UE text is released at the MN side, or the QoS of the UE is degraded by the core network , or a UE text is released by the core network.

If the expiration or update of CAG membership occurs at an SN side, the following steps 703b to 706b are performed.

In step 703b, a secondary node modification request message attached with the cause value (CAG Subscription Expiry) is sent from the MN side to the SN side.

In step 704b, a secondary node modification response message is sent from the SN side to the MN side.

In step 705b, a UE text modification response message is sent from the MN side to the core network.

In step 706b, a cell handover operation is performed at the SN side, or a UE text is released at the SN side, or the Qos of the UE is degraded by the core network, or a UE text is released by an Access and Mobility Management Function (AMF).

Through the above description of the implementations, those of ordinary skill in the art can understand clearly that the method according to the above embodiment may be implemented by software together with a necessary general-purpose hardware platform, or by hardware, but the former is preferable in most cases. Based on such understanding, the essence of the technical solution of the present disclosure or the contribution made by the technical solution of the present disclosure to the related art may be implemented in the form of a software product, which is stored in a storage medium (such as an ROM/RAM, a magnetic disk and an optical disc) and includes several instructions to enable a UE (which may be a mobile phone, a computer, a server or a network device) to execute the method described in each embodiment of the present disclosure.

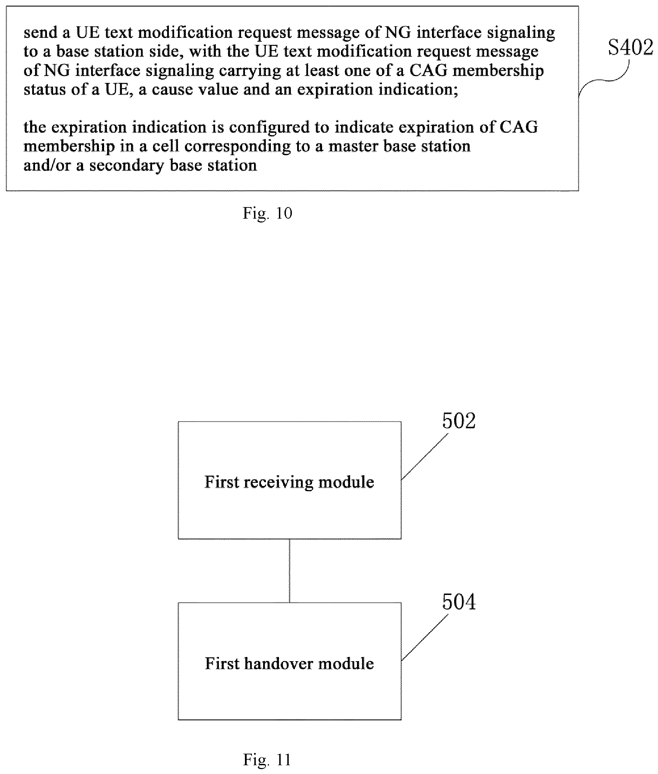

An embodiment of the present disclosure provides a user processing method applied to a core network side, and Fig. 10 is a flowchart illustrating a user processing method according to an embodiment of the present disclosure. As shown in Fig. 10, the method includes the following step:
S402, sending a UE text modification request message of NG interface signaling to a base station side, with the UE text modification request message of NG interface signaling carrying at least one of a CAG membership status of a UE, a cause value and an expiration indication;
the expiration indication is configured to indicate expiration of CAG membership in a cell corresponding to a master base station and/or a secondary base station.

It should be noted that an executing entity of S402 is a core network, but the present disclosure is not limited thereto.

In some implementations, after receiving the UE text modification request message of NG interface signaling sent by the core network, the method further includes:
sending a secondary node modification request, which carries the cause value, to a secondary base station.

In some implementations, after receiving the UE text modification request message of NG interface signaling sent by the core network, the method further includes at least one of the following steps:
triggering a cell handover procedure by a target network element;
triggering a UE text release procedure by the target network element;
triggering the UE text release procedure by the core network; and
degrading the QoS of the UE by the core network.

The target network element includes at least one of a master base station and a secondary base station.

In some implementations, the triggering the UE text release procedure by the target network element includes at least one of the following steps:
sending a UE text release request message, which carries the cause value, by a centralized network element at the base station side to the core network;
sending a UE text release command message, which carries the cause value, by the centralized network element at the base station side to a distributed network element at the base station side; and
sending a UE text release request message, which carries the cause value, by the distributed network element at the base station side to the centralized network element at the base station side.

In some implementations, the triggering the UE text release procedure by the core network includes:
sending a UE text release command message, which carries the cause value, by the core network to the centralized network element at the base station side.

In some implementations, after sending the UE text release command message by the core network to the centralized network element at the base station side, the method further includes:
sending a UE text release command message, which carries the cause value, by a CU at the base station side to the distributed network element at the base station side.

Through the above description of the implementations, those of ordinary skill in the art can understand clearly that the method according to the above embodiment may be implemented by software together with a necessary general-purpose hardware platform, or by hardware, but the former is preferable in most cases. Based on such understanding, the essence of the technical solution of the present disclosure or the contribution made by the technical solution of the present disclosure to the related art may be implemented in the form of a software product, which is stored in a storage medium (such as an ROM/RAM, a magnetic disk and an optical disc) and includes several instructions to enable a UE (which may be a mobile phone, a computer, a server or a network device) to execute the method described in each embodiment of the present disclosure.

An embodiment of the present disclosure provides a cell handover device applied to a master base station. The device is configured to implement the above embodiments and implementations, and what is described above will not be repeated here. The term "module" used below refers to software, hardware, or a combination of software and hardware that can perform predetermined functions. Although the device described in the following embodiment may be preferably implemented by software, the implementations of the device by hardware or a combination of software and hardware are possible and can be conceived.

Fig. 11 is a block diagram of a cell handover device according to an embodiment of the present disclosure. As shown in Fig. 11, the device includes:
a first receiving module 502 configured to receive a measurement report uploaded by a UE, and send a request message, which is configured to instruct a target network element to establish a UE text, to the target network element in response to the measurement report; and
a first handover module 504 configured to hand the UE over to a target cell corresponding to the target network element according to the UE text.

In some implementations, the request message includes at least one of:
a secondary base station addition request message and a handover request message.

In some implementations, the target network element includes at least one of:
a master base station and a secondary base station.

In some implementations, the request message carries CAG membership information of the target cell, which includes at least one of:
an identifier of the PLMN to which the target cell belongs, a CAG ID of the target cell, a membership status of the UE in the CAG to which the target cell belongs, and a cell access mode of the target cell.

In some implementations, the cell handover device is further configured to:
send first NG interface information, which carries the CAG membership information of the target cell, to a core network.

In some implementations, the first NG interface information includes at least one of:
a PDU session modification instruction message, a UE text modification instruction message and a path switch request message.

In some implementations, the device is further configured to:
after sending the first NG interface information to the core network, receive second NG interface information, which is configured to instruct the core network to verify the CAG membership information of the target cell so as to obtain the membership status of the UE in the CAG to which the target cell belongs, sent by the core network.

In some implementations, in response to that the membership status of the UE in the CAG to which the target cell belongs is configured to indicate that the UE does not belong to the CAG membership corresponding to the target cell, the device is configured to:
send a secondary base station modification request message to a secondary base station, with the secondary base station modification request message carrying at least one of:
a CAG ID of the UE, the membership status of the UE in the CAG to which the target cell belongs, and a cause for an inconsistency between a CAG membership status of the UE stored in the master base station and the membership status of the UE in the CAG to which the target cell belongs.

In some implementations, the second NG interface information includes at least one of:
a PDU session modification acknowledgement message, a UE text modification acknowledgement message and a path switch request acknowledgement message.

In some implementations, the cell access mode of the target cell includes at least one of:
a hybrid CAG cell, a closed CAG cell and an open CAG cell.

It should be noted that the above modules may be implemented by software or hardware. When implemented by hardware, the modules may be implemented in the following ways: all the modules are located in a same processor, or the modules are randomly combined and located in different processors, but the present disclosure is not limited thereto.

An embodiment of the present disclosure provides a cell handover device applied to a user side. The device is configured to implement the above embodiments and implementations, and what is described above will not be repeated here. The term "module" used below refers to software, hardware, or a combination of software and hardware that can perform predetermined functions. Although the device described in the following embodiment may be preferably implemented by software, the implementations of the device by hardware or a combination of software and hardware are possible and can be conceived.

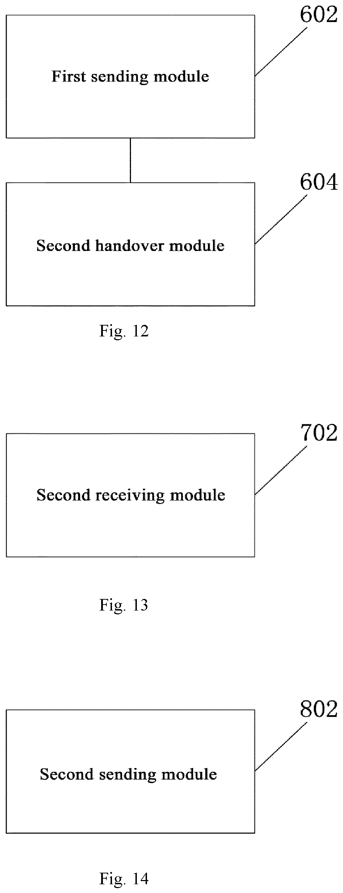

Fig. 12 is a block diagram of a cell handover device according to an embodiment of the present disclosure. As shown in Fig. 12, the device includes:
a first sending module 602 configured to send a measurement report, which is configured to instruct a master base station to send a request message to a target network element in response to the measurement report, to the master base station, with the request message configured to instruct the target network element to establish a UE text; and
a second handover module 604 configured to hand a UE over to a target cell corresponding to the target network element according to the UE text.

In some implementations, the request message includes at least one of:
a secondary base station addition request message and a handover request message.

In some implementations, the target network element includes at least one of:
a master base station and a secondary base station.

In some implementations, the request message carries CAG membership information of the target cell, which includes at least one of:
an identifier of the PLMN to which the target cell belongs, a CAG ID of the target cell, a membership status of the UE in the CAG to which the target cell belongs, and a cell access mode of the target cell.

In some implementations, the cell handover device is further configured to:
send first NG interface information, which carries the CAG membership information of the target cell, to a core network.

In some implementations, the first NG interface information includes at least one of:
a PDU session modification instruction message, a UE text modification instruction message and a path switch request message.

In some implementations, the device is further configured to:
after sending the first NG interface information to the core network, receive second NG interface information, which is configured to instruct the core network to verify the CAG membership information of the target cell so as to obtain the membership status of the UE in the CAG to which the target cell belongs, sent by the core network.

In some implementations, in response to that the membership status of the UE in the CAG to which the target cell belongs is configured to indicate that the UE does not belong to the CAG membership corresponding to the target cell, the device is configured to:
send a secondary base station modification request message to a secondary base station, with the secondary base station modification request message carrying at least one of:
a CAG ID of the UE, the membership status of the UE in the CAG to which the target cell belongs, and a cause for an inconsistency between a CAG membership status of the UE stored in the master base station and the membership status of the UE in the CAG to which the target cell belongs.

In some implementations, the second NG interface information includes at least one of:
a PDU session modification acknowledgement message, a UE text modification acknowledgement message and a path switch request acknowledgement message.

In some implementations, the cell access mode of the target cell includes at least one of:
a hybrid CAG cell, a closed CAG cell and an open CAG cell.

It should be noted that the above modules may be implemented by software or hardware. When implemented by hardware, the modules may be implemented in the following ways: all the modules are located in a same processor, or the modules are randomly combined and located in different processors, but the present disclosure is not limited thereto.

An embodiment of the present disclosure provides a user processing device applied to a base station side. The device is configured to implement the above embodiments and implementations, and what is described above will not be repeated here. The term "module" used below refers to software, hardware, or a combination of software and hardware that can perform predetermined functions. Although the device described in the following embodiment may be preferably implemented by software, the implementations of the device by hardware or a combination of software and hardware are possible and can be conceived.

Fig. 13 is a block diagram of a user processing device according to an embodiment of the present disclosure. As shown in Fig. 13, the device includes:
a second receiving module 702 configured to receive a UE text modification request message of NG interface signaling sent by a core network, with the UE text modification request message of NG interface signaling carrying at least one of a CAG membership status of a UE, a cause value and an expiration indication;
the expiration indication is configured to indicate expiration of CAG membership in a cell corresponding to a master base station and/or a secondary base station.

In some implementations, the user processing device is further configured to:
after receiving the UE text modification request message of NG interface signaling sent by the core network, send a secondary node modification request, which carries the cause value, to a secondary base station.

In some implementations, the device is further configured to perform at least one of the following:
after receiving the UE text modification request message of NG interface signaling sent by the core network, triggering a cell handover procedure by a target network element;
triggering a UE text release procedure by the target network element;
triggering the UE text release procedure by the core network; and
degrading the QoS of the UE by the core network.

The target network element includes at least one of a master base station and a secondary base station.

In some implementations, the triggering the UE text release procedure by the target network element includes at least one of the following:
sending a UE text release request message, which carries the cause value, by a centralized network element at the base station side to the core network;
sending a UE text release command message, which carries the cause value, by the centralized network element at the base station side to a distributed network element at the base station side; and
sending a UE text release request message, which carries the cause value, by the distributed network element at the base station side to the centralized network element at the base station side.

In some implementations, the triggering the UE text release procedure by the core network includes:
sending a UE text release command message, which carries the cause value, by the core network to the centralized network element at the base station side.

In some implementations, the device is further configured to:
after sending the UE text release command message by the core network to the centralized network element at the base station side, send a UE text release command message, which carries the cause value, by a CU at the base station side to the distributed network element at the base station side.

It should be noted that the above modules may be implemented by software or hardware. When implemented by hardware, the modules may be implemented in the following ways: all the modules are located in a same processor, or the modules are randomly combined and located in different processors, but the present disclosure is not limited thereto.

An embodiment of the present disclosure provides a user processing device applied to a core network side. The device is configured to implement the above embodiments and implementations, and what is described above will not be repeated here. The term "module" used below refers to software, hardware, or a combination of software and hardware that can perform predetermined functions. Although the device described in the following embodiment may be preferably implemented by software, the implementations of the device by hardware or a combination of software and hardware are possible and can be conceived.

Fig. 14 is a block diagram of a user processing device according to an embodiment of the present disclosure. As shown in Fig. 14, the device includes:
a second sending module configured to send a UE text modification request message of NG interface signaling to a base station side, with the UE text modification request message of NG interface signaling carrying at least one of a CAG membership status of a UE, a cause value and an expiration indication; and
the expiration indication is configured to indicate expiration of CAG membership in a cell corresponding to a master base station and/or a secondary base station.

In some implementations, the user processing device is further configured to:
after receiving the UE text modification request message of NG interface signaling sent by the core network, send a secondary node modification request, which carries the cause value, to a secondary base station.

In some implementations, the device is further configured to perform at least one of the following:
after receiving the UE text modification request message of NG interface signaling sent by the core network, triggering a cell handover procedure by a target network element;
triggering a UE text release procedure by the target network element;
triggering the UE text release procedure by the core network; and
degrading the QoS of the UE by the core network.

The target network element includes at least one of a master base station and a secondary base station.

In some implementations, the triggering the UE text release procedure by the target network element includes at least one of the following:
sending a UE text release request message, which carries the cause value, by a centralized network element at the base station side to the core network;
sending a UE text release command message, which carries the cause value, by the centralized network element at the base station side to a distributed network element at the base station side; and
sending a UE text release request message, which carries the cause value, by the distributed network element at the base station side to the centralized network element at the base station side.

In some implementations, the triggering the UE text release procedure by the core network includes:
sending a UE text release command message, which carries the cause value, by the core network to the centralized network element at the base station side.

In some implementations, the device is further configured to:
after sending the UE text release command message by the core network to the centralized network element at the base station side, send a UE text release command message, which carries the cause value, by a CU at the base station side to the distributed network element at the base station side.

It should be noted that the above modules may be implemented by software or hardware. When implemented by hardware, the modules may be implemented in the following ways: all the modules are located in a same processor, or the modules are randomly combined and located in different processors, but the present disclosure is not limited thereto.

An embodiment of the present disclosure further provides a storage medium having a computer program stored therein. The computer program is configured to perform the steps in any one of the above methods when being executed.

In some implementations, the storage medium may be configured to store a computer program configured to perform the following steps:
S1, receiving a measurement report uploaded by a UE, and sending a request message, which is configured to instruct a target network element to establish a UE text, to the target network element in response to the measurement report; and
S2, handing the UE over to a target cell corresponding to the target network element according to the UE text.

In some implementations, the above storage medium may include, but is not limited to, various medium capable of storing computer programs, such as a Universal Serial Bus Flash Disk (USB flash disk), an ROM, an RAM, a mobile hard disk, a magnetic disk and an optical disc.

An embodiment of the present disclosure further provides an electronic device, including a memory having a computer program stored therein, and a processor configured to execute the computer program to perform the steps in any one of the above methods.

In some implementations, the electronic device may further include a transmission device and an input/output device, both of which are coupled to the processor.

In some implementations, the processor may be configured to perform the following steps through the computer program:
S1, receiving a measurement report uploaded by a UE, and sending a request message, which is configured to instruct a target network element to establish a UE text, to the target network element in response to the measurement report; and
S2, handing the UE over to a target cell corresponding to the target network element according to the UE text.

It should be noted that, reference may be made to the examples described in the above embodiments and the above implementations for specific examples of the present embodiment, and the specific examples of the present embodiment are not repeated here.

An embodiment of the present disclosure further provides a storage medium having a computer program stored therein. The computer program is configured to perform the steps in any one of the above methods when being executed.

In some implementations, the storage medium may be configured to store a computer program configured to perform the following steps:
S1, sending a measurement report, which is configured to instruct a master base station to send a request message to a target network element in response to the measurement report, to the master base station, with the request message configured to instruct the target network element to establish a UE text; and
S2, handing a UE over to a target cell corresponding to the target network element according to the UE text.

In some implementations, the above storage medium may include, but is not limited to, various medium capable of storing computer programs, such as a USB flash disk, an ROM, an RAM, a mobile hard disk, a magnetic disk and an optical disc.

An embodiment of the present disclosure further provides an electronic device, including a memory having a computer program stored therein, and a processor configured to execute the computer program to perform the steps in any one of the above methods.

In some implementations, the electronic device may further include a transmission device and an input/output device, both of which are coupled to the processor.

In some implementations, the processor may be configured to perform the following steps through the computer program:
S1, sending a measurement report, which is configured to instruct a master base station to send a request message to a target network element in response to the measurement report, to the master base station, with the request message configured to instruct the target network element to establish a UE text; and
S2, handing a UE over to a target cell corresponding to the target network element according to the UE text.

It should be noted that, reference may be made to the examples described in the above embodiments and the above implementations for specific examples of the present embodiment, and the specific examples of the present embodiment are not repeated here.

An embodiment of the present disclosure further provides a storage medium having a computer program stored therein. The computer program is configured to perform the steps in any one of the above methods when being executed.

In some implementations, the storage medium may be configured to store a computer program configured to perform the following step:
S1, receiving a UE text modification request message of NG interface signaling sent by a core network, with the UE text modification request message of NG interface signaling carrying at least one of a CAG membership status of a UE, a cause value and an expiration indication;
the expiration indication is configured to indicate expiration of CAG membership in a cell corresponding to a master base station and/or a secondary base station

In some implementations, the above storage medium may include, but is not limited to, various medium capable of storing computer programs, such as a Universal Serial Bus Flash Disk (USB flash disk), an ROM, an RAM, a mobile hard disk, a magnetic disk and an optical disc.

An embodiment of the present disclosure further provides an electronic device, including a memory having a computer program stored therein, and a processor configured to run the computer program to perform the steps in any one of the above methods.

In some implementations, the electronic device may further include a transmission device and an input/output device, both of which are coupled to the processor.

In some implementations, the processor may be configured to perform the following step through the computer program:
S1, receiving a UE text modification request message of NG interface signaling sent by a core network, with the UE text modification request message of NG interface signaling carrying at least one of a CAG membership status of a UE, a cause value and an expiration indication;
the expiration indication is configured to indicate expiration of CAG membership in a cell corresponding to a master base station and/or a secondary base station

It should be noted that, reference may be made to the examples described in the above embodiments and the above implementations for specific examples of the present embodiment, and the specific examples of the present embodiment are not repeated here.

An embodiment of the present disclosure further provides a storage medium having a computer program stored therein. The computer program is configured to perform the steps in any one of the above methods when being executed.

In some implementations, the storage medium may be configured to store a computer program configured to perform the following step:
S1, sending a UE text modification request message of NG interface signaling to a base station side, with the UE text modification request message of NG interface signaling carrying at least one of a CAG membership status of a UE, a cause value and an expiration indication;
the expiration indication is configured to indicate expiration of CAG membership in a cell corresponding to a master base station and/or a secondary base station.

In some implementations, the above storage medium may include, but is not limited to, various medium capable of storing computer programs, such as a Universal Serial Bus Flash Disk (USB flash disk), an ROM, an RAM, a mobile hard disk, a magnetic disk and an optical disc.

An embodiment of the present disclosure further provides an electronic device, including a memory having a computer program stored therein, and a processor configured to run the computer program to perform the steps in any one of the above methods.

In some implementations, the electronic device may further include a transmission device and an input/output device, both of which are coupled to the processor.

In some implementations, the processor may be configured to perform the following step through the computer program:
S1, sending a UE text modification request message of NG interface signaling to a base station side, with the UE text modification request message of NG interface signaling carrying at least one of a CAG membership status of a UE, a cause value and an expiration indication;
the expiration indication is configured to indicate expiration of CAG membership in a cell corresponding to a master base station and/or a secondary base station.

It should be noted that, reference may be made to the examples described in the above embodiments and the above implementations for specific examples of the present embodiment, and the specific examples of the present embodiment are not repeated here.

Apparently, it should be understood by those of ordinary skill in the art that all the modules or steps described above in the present disclosure may be implemented by a general-purpose computing device, may be integrated in a single computing device or distributed on a network composed of a plurality of computing devices. In some implementations, the modules or steps may be implemented by program codes executable by a computing device, such that the modules or steps can be stored in a storage device and executed by a computing device. In some cases, the steps illustrated or described may be performed in an order different from that described herein. The modules or steps may be separately made into integrated circuit modules, or some of the modules or steps may be made into a single integrated circuit module. Thus, the present disclosure is not limited to any specific combination of hardware and software.

The description above is merely of the exemplified embodiments of the present disclosure, but is not intended to limit the present disclosure. Various modifications and changes may be made to the present disclosure by those of ordinary skill in the art. Any modification, equivalent replacement and improvement made within the principle of the present disclosure should be considered to be within the protection scope of the present disclosure.

## Claims

1. A cell handover method, applied to a master base station, comprising:
receiving a measurement report uploaded by a User Equipment (UE), and sending a request message, which is configured to instruct a target network element to establish a UE text, to the target network element in response to the measurement report; and
handing the UE over to a target cell corresponding to the target network element according to the UE text.

2. The method of claim 1, wherein the request message comprises at least one of:
a secondary base station addition request message and a handover request message.

3. The method of claim 1, wherein the target network element comprises at least one of:
a master base station and a secondary base station.

4. The method of any one of claims 1 to 3, wherein the request message carries Closed Access Group (CAG) membership information of the target cell, which comprises at least one of:
an identifier of Public Land Mobile Network (PLMN) to which the target cell belongs, a CAG ID of the target cell, a membership status of the UE in the CAG to which the target cell belongs, and a cell access mode of the target cell.

5. The method of claim 4, further comprising:
sending first next generation (NG) interface information, which carries the CAG membership information of the target cell, to a core network.

6. The method of claim 5, wherein the first NG interface information comprises at least one of:
a Protocol Data Unit (PDU) session modification instruction message, a UE text modification instruction message and a path switch request message.

7. The method of claim 5, further comprising:
after sending the first NG interface information to the core network, receiving second NG interface information, which is configured to instruct the core network to verify the CAG membership information of the target cell so as to obtain the membership status of the UE in the CAG to which the target cell belongs, sent by the core network.

8. The method of claim 7, further comprising:
in response to that the membership status of the UE in the CAG to which the target cell belongs is configured to indicate that the UE does not belong to the CAG membership corresponding to the target cell, sending a secondary base station modification request message to a secondary base station, with the secondary base station modification request message carrying at least one of:
a CAG ID of the UE, the membership status of the UE in the CAG to which the target cell belongs, and a cause for an inconsistency between CAG membership status of the UE stored in the master base station and the membership status of the UE in the CAG to which the target cell belongs.

9. The method of claim 7, wherein the second NG interface information comprises at least one of:
a PDU session modification acknowledgement message, a UE text modification acknowledgement message and a path switch request acknowledgement message.

10. The method of claim 4, wherein the cell access mode of the target cell comprises at least one of:
a hybrid CAG cell, a closed CAG cell and an open CAG cell.

11. A cell handover method, applied to a user side, comprising:
sending a measurement report, which is configured to instruct a master base station to send a request message to a target network element in response to the measurement report, to the master base station, with the request message configured to instruct the target network element to establish a UE text; and
handing a UE over to a target cell corresponding to the target network element according to the UE text.

12. A user processing method, applied to a base station side, comprising:
receiving a UE text modification request message of NG interface signaling sent by a core network, with the UE text modification request message of NG interface signaling carrying at least one of a CAG membership status of a UE, a cause value and an expiration indication;
wherein the expiration indication is configured to indicate expiration of CAG membership in a cell corresponding to at least one of a master base station and a secondary base station.

13. The method of claim 12, further comprising:
after receiving the UE text modification request message of NG interface signaling sent by the core network, sending a secondary node modification request, which carries the cause value, to a secondary base station.

14. The method of claim 12, further comprising at least one of:
after receiving the UE text modification request message of NG interface signaling sent by the core network, triggering a cell handover procedure by a target network element;
triggering a UE text release procedure by the target network element;
triggering the UE text release procedure by the core network; and
degrading the quality of service (QoS) of the UE by the core network;
wherein the target network element comprises at least one of a master base station and a secondary base station.

15. The method of claim 14, wherein the triggering the UE text release procedure by the target network element comprises at least one of:
sending a UE text release request message, which carries the cause value, by a centralized network element at the base station side to the core network;
sending a UE text release command message, which carries the cause value, by the centralized network element at the base station side to a distributed network element at the base station side; and
sending a UE text release request message, which carries the cause value, by the distributed network element at the base station side to the centralized network element at the base station side.

16. The method of claim 15, wherein the triggering the UE text release procedure by the core network comprises:
sending a UE text release command message, which carries the cause value, by the core network to the centralized network element at the base station side.

17. The method of claim 16, further comprising:
after sending the UE text release command message by the core network to the centralized network element at the base station side, sending a UE text release command message, which carries the cause value, by a Centralized Unit (CU) at the base station side to the distributed network element at the base station side.

18. A user processing method, applied to a core network side, comprising:
sending a UE text modification request message of NG interface signaling to a base station side, with the UE text modification request message of NG interface signaling carrying at least one of a CAG membership status of a UE, a cause value and an expiration indication;
wherein the expiration indication is configured to indicate expiration of CAG membership in a cell corresponding to at least one of a master base station and a secondary base station.

19. A cell handover device, applied to a master base station, comprising:
a first receiving module configured to receive a measurement report uploaded by a UE, and send a request message, which is configured to instruct a target network element to establish a UE text, to the target network in response to the measurement report; and
a first handover module configured to hand the UE over to a target cell corresponding to the target network element according to the UE text.

20. A cell handover device, applied to a user side, comprising:
a first sending module configured to send a measurement report, which is configured to instruct a master base station to send a request message to a target network element in response to the measurement report, to the master base station, with the request message configured to instruct the target network element to establish a UE text; and
a second handover module configured to hand a UE over to a target cell corresponding to the target network element according to the UE text.

21. A user processing device, applied to a base station side, comprising:
a second receiving module configured to receive a UE text modification request message of NG interface signaling sent by a core network, with the UE text modification request message of NG interface signaling carrying at least one of a CAG membership status of a UE, a cause value and an expiration indication;
wherein the expiration indication is configured to indicate expiration of CAG membership in a cell corresponding to at least one of a master base station and a secondary base station.

22. A user processing device, applied to a core network side, comprising:
a second sending module configured to send a UE text modification request message of NG interface signaling to a base station side, with the UE text modification request message of NG interface signaling carrying at least one of a CAG membership status of a UE, a cause value and an expiration indication;
wherein the expiration indication is configured to indicate expiration of CAG membership in a cell corresponding to at least one of a master base station and a secondary base station.

23. A storage medium having a computer program stored therein, wherein the computer program is configured to, when executed, perform the method of any one of claims 1 to 18.

24. An electronic device, comprising a memory having a computer program stored therein, and a processor configured to execute the computer program to perform the method of any one of claims 1 to 18.
